# DEMANDE DE BREVET EUROPEEN

(11) **EP 0 677 930 A1**
(43) Date de publication de la demande: **18.10.1995**
(21) Numéro de dépôt: 95400802.5
(22) Date de dépôt: 10.04.1995
(51) Int. Cl.: H04B 7/26

(54) **Procédé AMRF à structure trame/multitrame et signal correspondant**

(30) Priorité: 15.04.1994 FR 9404556
(71) Demandeur: ALCATEL MOBILE COMMUNICATION FRANCE, 75008 Paris (FR)
(72) Inventeur: Delprat, Marc, 78150 Le Chesnay (FR); Andrieu, Vianney, 75011 Paris (FR); Gourgue, Frédéric, 75017 Paris (FR); Gaydu, Gladys, 93110 Rosny sous Bois (FR); Nouchi, Charles, 92150 Suresnes (FR)
(74) Mandataire: El Manouni, Josiane

(57) **Abrégé**

L'invention concerne un procédé de radiocommunication numérique, dans un système à l'alternat, une station mobile étant soit en mode d'émission soit en mode de réception, et à accès multiple par répartition en fréquence dans lequel, pour chaque communication entre une station mobile et une station de base, une première fréquence est allouée pour le sens de transmission montant, de la station mobile vers la station de base, et une seconde fréquence est allouée pour le sens de transmission descendant, de la station de base vers la station mobile.

Selon l'invention, les signaux échangés par lesdites stations sont organisés en trames (T1 à T18), de durée fixe prédéterminée, lesdites trames étant regroupées en multitrames (MT(N) à MT(N+2)) comprenant un nombre prédéterminé de trames, et chacune desdites multitrames comprend au moins une trame de contrôle (T18), au moins certaines desdites trames de contrôle étant des trames d'écoute (42), pendant lesquelles la station mobile en mode d'émission interrompt l'émission, passe en mode de réception puis, éventuellement, revient en mode d'émission.

## Description

Le domaine de l'invention est celui des radiocommunications de données mutiplexées, et notamment des systèmes de radiocommunication fonctionnant à l'alternat, dans lesquels une station mobile ne peut pas être simultanément en mode d'émission et en mode de réception.

L'invention trouve une application avantageuse dans les systèmes de radiocommunication cellulaire avec des mobiles, tels que ceux conçus selon le standard de radiotélécommunication public GSM (Groupe Spécial Mobile). L'invention a toutefois été particulièrement développée pour le standard TETRA (Trans European Trunk Radio System) de radiocommunication professionnelle avec les mobiles (en anglais, PMR: Professional Mobile Radio) destiné par exemple aux réseaux utilisés par les services de pompier, de police, de taxi, etc...

Dans ce type de système, les communications en mode établi (stable), dans le sens station de base vers station mobile (sens descendant), ou inversement, dans le sens station mobile vers station de base (sens ascendant), sont acheminées sur des canaux de trafic (TCH, pour Traffic CHannel).

Généralement, les systèmes de radiocommunication numérique, et notamment ceux du type TETRA, fonctionnent selon un mode AMRT (Accès Multiple à Répartition dans le Temps).

Dans un tel mode AMRT, chaque canal de trafic se voit allouer une fréquence de transmission (voire un jeu de plusieurs fréquences en GSM, où un principe de saut de fréquence a été retenu) et est partagé par un multiplexage temporel entre plusieurs communications avec des stations mobiles distinctes (typiquement 4 dans le standard TETRA, ou 8 actuellement dans le GSM).

Le multiplexage temporel consiste à diviser le temps en trames de durée fixe et prédéterminée, ces trames étant elles-mêmes divisées en intervalles de temps. A chaque communication à assurer, on associe un ou plusieurs intervalles de temps. Ainsi, une trame comprenant N intervalles de temps peut correspondre à N communications, chaque station mobile communiquant sur un des intervalles de temps de chaque trame. Actuellement, N = 4 pour le standard TETRA et N = 8 pour le GSM.

Chaque communication est susceptible d'acheminer des signaux de parole (phonie) codés numériquement à bas débit (inférieur à 16 kbits/s), ou des données proprement dites.

Il existe une nouvelle génération de systèmes de radiocommunication, actuellement en cours de normalisation (en particulier pour le système TETRA), dans laquelle il est notamment proposé de remplacer le mode AMRT par le mode AMRF (Accès Multiple par Répartition en Fréquence).

En mode AMRF, à chaque communication à assurer entre une station de base et une station mobile, on associe une première fréquence pour le sens de transmission montant (de la station mobile vers la station de base) et une seconde fréquence pour le sens de transmission descendant (de la station de base vers la station mobile). Dans un tel mode AMRF, le fonctionnement est continu dans le temps et non pas découpé en intervalles de temps comme dans le mode AMRT.

De plus, la combinaison du mode AMRF au cas particulier de l'alternat implique qu'une station mobile est soit en train d'émettre (sur une première fréquence) de façon continue, soit en train de recevoir (sur une seconde fréquence) de façon continue.

Or, si le fonctionnement de façon continue en mode de réception ne pose pas de problème particulier, il n'en est pas de même pour un fonctionnement de façon continue en mode d'émission.

En effet, le fonctionnement continu en mode émission empêche, à moins de perturber le trafic, de transmettre de la signalisation associée à la communication. Par signalisation associée à la communication on entend par exemple des instructions ou des paramètres liés au fonctionnement du réseau et relatifs à la gestion du canal de trafic utilisé.

Par ailleurs, le fonctionnement continu en mode d'émission ne permet pas, de façon simple, de mettre en oeuvre une fonction d'écoute. Or, une telle fonction d'écoute est très importante puisque c'est elle qui permet la réalisation de certaines applications, et notamment:
- I'écoute de la signalisation descendante associée à la communication, afin par exemple de mettre en oeuvre la priorité préemptive, c'est-à-dire la possibilité, lorsqu'on désire demander à toutes les stations mobiles de libérer leur canal respectif pour faire face à une urgence, d'atteindre non seulement toutes les stations mobiles en mode de réception mais également la station mobile en train d'émettre (utilisation, par exemple, pour lancer un appel de police général à tous les véhicules d'un même groupe d'intervention);
- la détection et/ou la mesure des signaux diffusés dans les cellules adjacentes, dans le cas d'un réseau de communication cellulaire, afin par exemple de préparer un réétablissement d'appel, c'est-à-dire le passage d'une station de base d'une cellule à une autre;
- la double-veille, dans le cas où deux stations mobiles dialoguent directement entre elles, sans passer par l'intermédiaire de la station de base, cette double-veille permettant à chacune des deux stations mobiles d'écouter pour savoir si la station de base n'essaie pas de la joindre (par exemple pour la prévenir qu'il y a un appel plus important).

Il est à noter que la mise en oeuvre d'une telle fonction d'écoute est très simple dans le cas d'un mode AMRT. En effet, une même communication est dans ce cas constituée d'une succession d'intervalles de temps, à raison d'un intervalle de temps par trame. Il suffit donc, entre les intervalles de temps d'une même communication, de passer en mode de réception, d'écouter, puis de revenir au mode d'émission. Bien que le temps de passage d'un mode (d'émission ou de réception) à l'autre soit assez long, le temps qui sépare deux intervalles de temps affectés à une même communication, c'est-à-dire N-1 intervalles de temps pour une trame de N intervalles de temps, est toujours largement suffisant.

Il est évident que dans le cas d'un mode AMRF à l'alternat, le fait que la station mobile émette de façon continue rend impossible la transposition de la solution utilisée dans le cas d'un mode AMRT.

L'invention a notamment pour objectif de résoudre les différents problèmes que pose l'évolution d'un mode AMRT vers un mode AMRF dans un système de radiocommunication à l'alternat.

Plus précisément, l'un des objectifs de la présente invention est de fournir un procédé de radiocommunication numérique, dans un système AMRF à l'alternat, qui permette à une station mobile, lorsqu'elle est en communication avec une station de base, de transmettre de la signalisation associée à la communication sans trop perturber le trafic.

L'invention a également pour objectif de fournir un tel procédé qui permette à une station mobile en mode d'émission de mettre en oeuvre une fonction d'écoute, notamment pour écouter de la signalisation descendante, détecter et/ou mesurer des signaux diffusés dans des cellules adjacentes, ou encore réaliser une double-veille.

Ces objectifs, ainsi que d'autres qui apparaîtront par la suite, sont atteints selon l'invention à l'aide d'un procédé de radiocommunication numérique, dans un système à l'alternat, une station mobile étant soit en mode d'émission soit en mode de réception, et à accès multiple par répartition en fréquence dans lequel, pour chaque communication entre une station mobile et une station de base, une première fréquence est allouée pour le sens de transmission montant, de la station mobile vers la station de base, et une seconde fréquence est allouée pour le sens de transmission descendant, de la station de base vers la station mobile,
les signaux échangés par lesdites stations étant organisés en trames, de durée fixe prédéterminée, lesdites trames étant regroupées en multitrames comprenant un nombre prédéterminé de trames,
et chacune desdites multitrames comprenant au moins une trame de contrôle, au moins certaines desdites trames de contrôle étant des trames d'écoute, pendant lesquelles la station mobile en mode d'émission interrompt l'émission, passe en mode de réception puis, éventuellement, revient en mode d'émission.

Le principe de l'invention est donc de définir une structure de trames / multitrames pour les signaux échangés entre les stations mobiles et les stations de base, avec deux types de trames dans chaque multitrames : des trames de trafic et au moins une trame de contrôle.

Les trames de contrôle peuvent être utilisées soit pour transmettre des données particulières (et notamment de la signalisation), soit pour mettre en oeuvre une fonction d'écoute. La fonction d'écoute, lorsqu'elle est mise en oeuvre, l'est pendant au moins une partie d'une trame de contrôle. Par conséquent, une station mobile en cours de transmission peut s'interrompre pour écouter, sans que le trafic soit perturbé puisque cette écoute se fait pendant une trame qui ne transporte pas de trafic. De cette façon, il est possible de transmettre des données de contrôle et d'avoir des périodes d'écoute sans que cela se fasse au détriment de la transmission du trafic.

Avantageusement, les stations mobiles sont réparties en au moins un groupe, les stations mobiles d'un même groupe possédant une première fréquence pour le sens de transmission montant et une même seconde fréquence pour le sens de transmission descendant, une seule station mobile d'un groupe pouvant émettre à la fois.

Ainsi, un groupe peut correspondre à la police, un autre aux pompiers, encore un autre aux taxis, etc...

Il est à noter que le passage du mode de réception au mode d'émission dans la station mobile n'est pas instantané: un temps de commutation non négligeable doit être pris en compte. En conséquence, dans un mode de réalisation préférentiel de l'invention, les instants de début de trames et de début de multitrames vus de la station de base sont décalés dans le temps, entre les deux sens de transmission, d'une durée au moins égale au temps de retournement émission/réception.

Ainsi, on peut supprimer ou réduire le temps de latence introduit par la station de base, c'est-à-dire le décalage temporel entre le moment où une station de base reçoit une trame et le moment où elle en réémet le contenu dans une autre trame. En effet, dans ce mode de réalisation préférentiel, le décalage entre les instants de début de trames et de début de multitrames (vus de la station mobile) entre les deux sens de transmission, se traduit par la mise à la disposition de la station de base d'un certain temps pour préparer (notamment par décodage / recodage) une trame reçue (arrivant d'une station mobile (sens montant)) avant de la réemettre dans une trame à destination d'une autre station mobile (sens descendant).

Avantageusement, les trames, respectivement les multitrames, du sens descendant sont émises avec un retard correspondant sensiblement à un quart de trame, par rapport aux trames, respectivement aux multitrames, du sens montant. Ce mode de réalisation correspond notamment au cas où chaque trame de trafic comprend une seule unité de données codées.

Selon une autre variante avantageuse, les trames, respectivement les multitrames, du sens montant sont émises avec un retard correspondant sensiblement à un quart de trame, par rapport aux trames, respectivement aux multitrames, du sens descendant. Ce mode de réalisation correspond notamment au cas où chaque trame de trafic comprend deux unités de données codées non entrelacées.

Préférentiellement, au moins certaines desdites trames de contrôle comprennent deux unités de données, de durée sensiblement égale à une demi-trame. Ainsi, une même trame de contrôle peut par exemple contenir deux unités de données, l'une étant destinée aux stations mobiles en mode de réception et l'autre à la station mobile en mode d'émission (qui va devoir passer en mode de réception pendant cette trame de contrôle pour écouter cette seconde unité de données).

De façon préférentielle, lesdites trames de contrôle sont utilisées par le mobile en mode d'émission pour effectuer au moins une des opérations appartenant au groupe comprenant les opérations suivantes:
- écouter de la signalisation descendante associée à la communication;
- détecter et/ou mesurer les signaux diffusés dans les cellules adjacentes, dans le cas d'un réseau de communication cellulaire;
- transmettre de la signalisation montante associée à la communication;
- recevoir en mode direct des informations provenant d'une autre station mobile.

Avantageusement, on définit un schéma d'écoute, affectant à chacune desdites trames de contrôle une desdites opérations. De cette façon, chaque station mobile sait dans quelle(s) trame(s) elle doit écouter (par exemple une trame de contrôle sur cinq) ou transmettre de la signalisation montante.

Dans un mode de réalisation avantageux de l'invention, le procédé comprend une procédure de vol de trame, permettant de remplacer une trame de données par une trame volée pouvant être utilisée de façon similaire aux trames de contrôle. Ainsi, les trames volées permettent à une station mobile d'augmenter ses durées d'écoute, ou la quantité de signalisation montante qu'elle transmet, ou encore à une station mobile en limite de cellule de consacrer plus de temps à l'écoute des cellules adjacentes. De façon avantageuse, lorsque le procédé comprend une telle procédure de vol de trame, le schéma d'écoute définit également la fonction et la position des trames volées.

Préférentiellement, le procédé de l'invention comprend les étapes suivantes, pour l'écoute de la signalisation descendante dans une desdites trames de contrôle du sens montant:
- pendant le début de ladite trame de contrôle du sens montant, passage du mode d'émission au mode de réception;
- réception d'au moins un message contenu dans une trame de contrôle du sens descendant;
- pendant la fin de ladite trame de contrôle du sens montant, passage du mode de réception au mode d'émission ou, éventuellement, interruption de la communication.

Cette caractéristique présente une synergie avec une caractéristique discutée précédemment, selon laquelle les instants de début de trames et de début de multitrames vus de la station mobile sont décalés dans le temps, entre les deux sens de transmission.

En effet, le passage du mode d'émission au mode de réception, pendant le début de la trame de contrôle, se fait pendant un intervalle de temps correspondant à ce décalage dans le temps entre les deux sens de transmission. Le mode de réception démarre donc bien sur un début de trame ou un début d'unité de données du sens descendant.

De même, dans l'autre sens, le passage du mode de réception au mode d'émission, pendant la fin de ladite trame de contrôle, se fait pendant un intervalle de temps correspondant à ce décalage dans le temps entre les deux sens de transmission. Le mode d'émission reprend donc bien sur un début de trame du sens montant.

Dans un mode de réalisation préférentiel de l'invention, le procédé comprend une procédure de mode direct, selon laquelle deux stations mobiles communiquent directement, sans l'intermédiaire de la station de base.

Avantageusement, en mode direct, dans les deux sens de transmission, les débuts de trames et de multitrames sont en avance d'un quart de trame par rapport aux débuts de trames et de multitrames du sens descendant, vus de la station de base.

De cette façon, les stations mobiles se comportent toutes les deux de la même façon vis-à-vis de la station de base. De plus, grâce au décalage entre les débuts de trames et multitrames échangées directement entre les stations mobiles et les débuts de trames et multitrames émises par la station de base, les stations mobiles peuvent écouter, pendant une trame de contrôle, un éventuel message envoyé par la station de base. Le décalage introduit ici a le même rôle que celui introduit lorsque la communication passe par l'intermédiaire de la station de base.

Selon une variante avantageuse, en mode direct, dans les deux sens de transmission, les débuts de trames et de multitrames sont en retard d'un quart de trame par rapport aux débuts de trames et de multitrames du sens descendant, vus de la station de base.

Préférentiellement, chaque multitrame comprend 18 trames, la dernière étant une trame de contrôle.

Avantageusement, la durée d'une trame est de l'ordre de 57 ms.

L'invention concerne également un signal de radiocommunication numérique échangé entre une station mobile et une station de base, dans un système à l'alternat, une station mobile étant soit en mode d'émission soit en mode de réception, et à accès multiple par répartition en fréquence dans lequel, pour chaque communication entre une station mobile et une station de base, une première fréquence est allouée pour le sens de transmission montant, de la station mobile vers la station de base, et une seconde fréquence est allouée pour le sens de transmission descendant, de la station de base vers la station mobile,
ledit signal étant organisé en trames, de durée fixe prédéterminée, lesdites trames étant regroupées en multitrames comprenant un nombre prédéterminé de trames,
et chacune desdites multitrames comprenant au moins une trame de contrôle, au moins certaines desdites trames de contrôle étant des trames d'écoute, pendant lesquelles la station mobile en mode d'émission interrompt l'émission, passe en mode de réception puis, éventuellement, revient en mode d'émission.

D'autres caractéristiques et avantages de l'invention apparaîtront à la lecture de la description suivante de plusieurs modes de réalisation préférentiels de l'invention, donnés à titre d'exemple indicatif et non limitatif, et des dessins annexés, dans lesquels:
- la figure 1 schématise de façon partielle un réseau de radiocommunication cellulaire du type TETRA, dans lequel peut être mis en oeuvre le procédé selon l'invention;
- la figue 2 illustre un premier mode de réalisation d'une structure de trames / multitrames selon l'invention;
- la figure 3 illustre le transfert, dans une station de base, du contenu d'une trame du sens montant dans une trame du sens descendant, dans le cas d'une structure telle que présentée sur la figure 2;
- la figure 4 illustre la fonction d'écoute de la signalisation descendante dans une station mobile, dans le cas d'une structure telle que présentée sur la figure 2;
- la figue 5 illustre un second mode de réalisation d'une structure de trames - multitrames selon l'invention;
- la figure 6 illustre le transfert, dans une station de base, du contenu d'une trame du sens montant dans une trame du sens descendant, dans le cas d'une structure telle que présentée sur la figure 5;
- la figure 7 illustre la fonction d'écoute de la signalisation descendante dans une station mobile, dans le cas d'une structure telle que présentée sur la figure 5 ; et
- la figure 8 présente un exemple de structure d'organisation en trames et multitrames, correspondant à la mise en oeuvre du procédé de l'invention.

Un réseau de radiocommunication cellulaire est constitué d'une pluralité de cellules préférentiellement adjacentes, couvrant un espace géographique dans lequel peuvent évoluer des stations mobiles. Dans l'exemple détaillé ci-après, le réseau de référence sera un réseau de type TETRA. Il est clair cependant que l'invention n'est pas limitée à ce type de réseau et concerne par exemple également un réseau de type GSM.

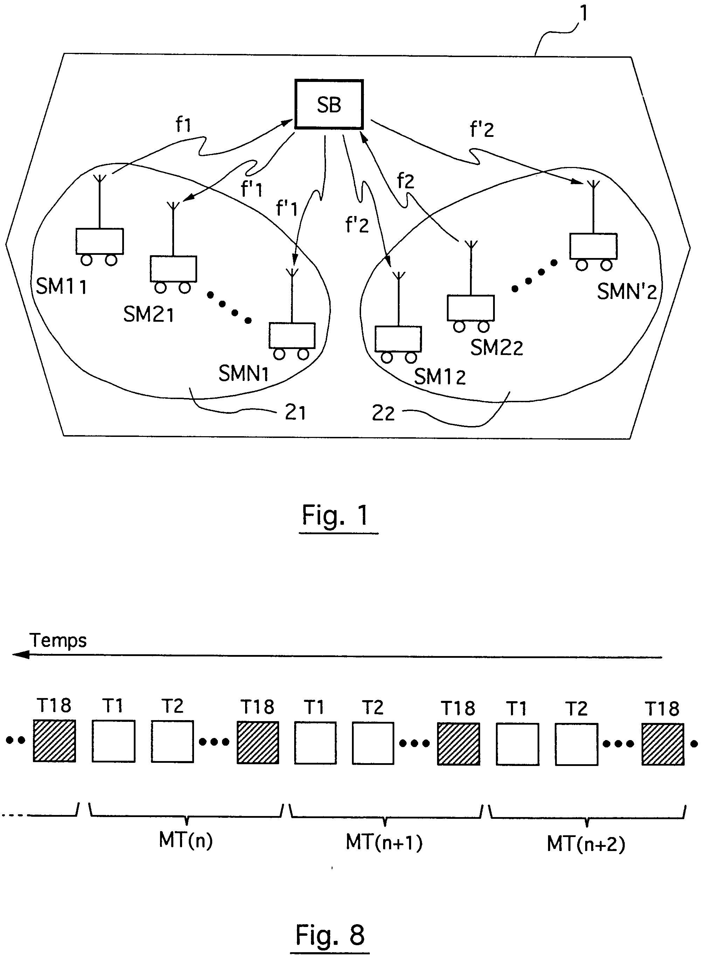

Sur la figure 1, par souci de simplification, on a représenté seulement une cellule 1 du réseau de communication. D'une façon générale, pour chaque cellule 1, les stations mobiles SM qui s'y trouvent établissent une communication avec une station de base SB couvrant la cellule 1.

Dans le cas de TETRA, l'architecture interne de l'infrastructure n'est pas spécifiée par la norme, mais on appellera tout de même "station de base SB les équipements d'émission - réception de l'infrastructure.

Dans le cadre de l'invention, le réseau de radiocommunication est du type mettant en oeuvre la technique AMRF (Accès Multiple par Répartition en Fréquence). Ainsi, pour chaque communication entre une station mobile SM et une station de base SB, une première fréquence est allouée pour le sens de transmission montant (de la station mobile vers la station de base), et une seconde fréquence est allouée pour le sens de transmission descendant (de la station de base vers la station mobile).

Dans l'exemple particulier présenté sur la figure 1, les stations mobiles SM sont réparties en groupes 2₁, 2₂. Les stations mobiles d'un même groupe SM1₁ à SMN₁, SM1₂ à SMN'₂ possèdent une même première fréquence f₁, f₂ pour le sens de transmission montant (d'une station mobile vers la station de base) et une même seconde fréquence f'₁, f'₂ pour le sens de transmission descendant (de la station de base vers une station mobile). De plus, une seule station mobile d'un groupe 2₁, 2₂ peut émettre à la fois. Ainsi, sur la figure 1, dans le premier groupe 2₁, seule la station SM1₁ est en mode d'émission, les autres N-1 stations étant en mode de réception.

On considère par la suite le cas d'un système de radiocommunication fonctionnant à l'alternat, c'est-à-dire un système dans lequel une station mobile ne peut pas être simultanément en mode d'émission et en mode de réception. Il est à noter que la station de base, par contre, fonctionne de façon simultanée puisqu'elle peut être en même temps en mode d'émission vis-à-vis de certaines stations mobiles et en mode de réception vis-à-vis d'autres stations mobiles SM1₁, SM2₂.

L'invention consiste donc à définir une structure particulière pour les signaux échangés dans les deux sens entre une station de base associée à une cellule et les stations mobiles se trouvant dans cette cellule.

Selon l'invention, et comme illustré sur la figure 8, dans chaque sens de transmission (montant ou descendant), le temps est divisé en trames T1 à T18 de durée fixe et prédéterminée, et les trames sont regroupées en multitrames MT(n) à MT (n+2) comprenant un nombre prédéterminé de trames. Une multitrame comprend des trames de trafic et au moins une trame de contrôle.

Ainsi, dans l'exemple présenté sur la figure, chaque multitrame MT (n) à MT (n+2) comprend 17 trames de trafic T1 à T17 et une trame T18 de contrôle (la dernière). La durée d'une trame est par exemple de l'ordre de 57 ms.

L'invention consiste donc notamment à libérer périodiquement une durée prédéterminée (celle de la trame de contrôle) pour une transmission autre que la transmission de trafic. La transmission de trafic est interrompue mais de façon connue. Par conséquent, il est possible de réduire les perturbations de trafic liées aux interruptions successives.

Une station mobile peut utiliser les trames de contrôle de deux façons distinctes: soit pour transmettre, soit pour écouter.

Dans le premier cas, la station mobile qui se trouve en mode d'émission peut utiliser la trame de contrôle pour transmettre de la signalisation montante associée à la communication.

Dans le second cas, la station mobile qui se trouve en mode d'émission peut utiliser la trame de contrôle pour mettre en oeuvre une fonction d'écoute. La station mobile doit alors, pendant la trame de contrôle (dite "trame d'écoute" dans ce cas particulier), passer du mode d'émission au mode de réception et, éventuellement, revenir au mode d'émission, de façon à transmettre normalement la trame de trafic suivante.

Cette fonction d'écoute peut correspondre à diverses opérations, selon la nature de ce qui est écouté.

Tout d'abord, la station mobile qui se trouve en mode d'émission peut, pendant une trame d'écoute, écouter de la signalisation descendante (c'est-à-dire venant de la station de base) associée à la communication. Ceci permet notamment la mise en oeuvre de la priorité préemptive.

Une autre opération peut consister, pour la station mobile, à détecter et/ou mesurer les signaux diffusés dans les cellules adjacentes. Ceci permet notamment de préparer un ré-établissement d'appel.

Encore une autre opération peut consister, pour la station mobile, à recevoir en mode direct des informations provenant d'une autre station mobile (sans passer par l'intermédiaire de la station de base, comme c'est le cas généralement).

Une réalisation similaire peut également être mise en place afin de pemettre à un mobile dialoguant en mode direct de venir écouter les éventuelles messages de sa station de base qui lui sont destinés.

Afin d'affecter à chacune des trames de contrôle une des opérations possibles, on définit un schéma d'écoute. Il s'agit de préciser à chaque station mobile de quelle façon elle doit utiliser ses trames de contrôle. Par exemple, une station mobile peut utiliser les trames de contrôle de la façon suivante:
- deux trames de contrôle sur cinq sont utilisées pour transmettre de la signalisation montante;
- deux trames de contrôle sur cinq sont utilisées pour écouter de la signalisation descendante;
- une trame de contrôle sur cinq est utilisée, en alternance, soit pour détecter et/ou mesurer les signaux diffusés dans les cellules adjacentes, soit pour recevoir en mode direct des information provenant d'une autre station mobile.

La suite de la description concerne deux modes de réalisation particulier de l'invention dans lesquels les instants de début de trames et de début de multitrames vus de la station mobile sont décalés dans le temps, entre les deux sens de transmission (à savoir le sens montant et le sens descendant).

Il est important de noter que ce décalage est celui "vu" de la station de base. Il ne tient donc pas compte et est d'une nature différente d'un éventuel décalage dû à des temps de transmission distincts dans les deux sens.

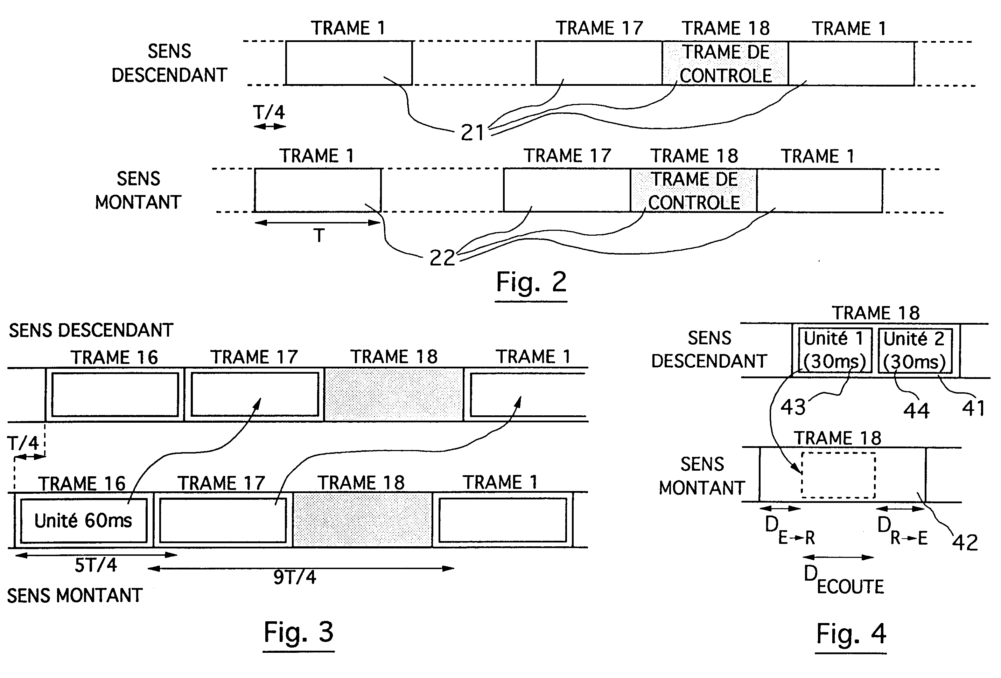

Dans le premier mode de réalisation, présenté en relation avec les figures 2 à 4, les trames 21, respectivement les multitrames, du sens descendant sont émises avec un retard d'environ un quart de trame T/4, par rapport aux trames 22, respectivement aux multitrames, du sens montant.

Ce décalage est illustré sur la figure 2. Le décalage est en fait choisi autour d'une valeur donnée (un quart de trame dans cet exemple) et n'est pas strictement égal à cette valeur. En effet, les temps de retournement de la station mobile (du mode d'émission vers le mode réception, et inversement) peuvent être différents, et il convient alors d'en tenir compte. Par ailleurs, il est parfois intéressant d'avoir un retard plus faible, afin de récupérer des informations de contrôle qui précèdent les informations utiles dans une trame.

La figure 3 illustre le transfert, dans une station de base, du contenu d'une trame du sens montant dans une trame du sens descendant.

En effet, la station de base reçoit des trames et doit les retransmettre : elle doit donc notamment décoder le contenu de chaque trame reçue, le recoder, puis le placer dans une trame à émettre.

Dans l'exemple présenté, chaque trame de trafic comprend une seule unité de données codées, de durée sensiblement égale à celle de la trame (soit 60 ms par exemple). Il est clair cependant que d'autres solutions sont envisageables. Ainsi, une trame peut par exemple contenir deux unités de données, de durée sensiblement égale à une demi-trame (soit 30 ms par exemple).

Pour pouvoir préparer une trame reçue (dans le sens montant) afin de la retransmettre (dans le sens descendant), la station de base doit avoir recu l'ensemble de l'unité de données codées contenue dans cette trame reçue. Du fait du décalage de T/4 entre les deux sens, la station de base dispose de suffisamment de temps pour copier une i^{éme} trame de trafic d'une j^{ème} multitrame du sens montant dans la (i+1)^{ème} trame de trafic de la j^{ème} multitrame du sens descendant (sauf pour une trame de trafic précédant une trame de contrôle, qui est copiée dans la première trame suivant cette trame de contrôle).

Ainsi, avec une multitrame de 18 trames, et une trame de contrôle en 18^{ème} position, on place le contenu de la i^{éme} trame de trafic du sens montant:
- dans la (i + 1)^{ème} trame de trafic du sens descendant (pour i ε [1,17]),
- dans la première trame de trafic de la multitrame suivante du sens descendant (pour i = 17).

Lors de la recopie du sens montant vers le sens descendant , la station de base introduit un délai de latence de:
- cinq quarts de trame 5T/4, pour les trames d'ordre 1 à 16, et
- neuf quarts de trame 9T/4, pour la trame d'ordre 17, du fait de la trame de contrôle d'ordre 18 (en effet on a: 5T/4 + 1T).

La figure 4 illustre la fonction d'écoute de la signalisation descendante dans une station mobile.

Pendant le début D_{E->R} de la trame de contrôle 42 du sens montant, la station mobile passe du mode d'émission au mode de réception. Pendant la fin D_{E->R} de la trame de contrôle 42 du sens montant, la station mobile passe du mode d'émission au mode de réception (ou interrompt la communication). Entre le début et la fin de la trame de contrôle 42 du sens montant, la station mobile peut donc recevoir (pendant une durée D_{ECOUTE}) un message contenu dans la trame de contrôle 41 du sens descendant.

La figure 4 illustre un mode de réalisation particulier dans lequel une trame de contrôle 41 du sens montant comprend deux unités de données 43, 44, de durée sensiblement égale à une demi-trame. Ainsi, la station mobile écoute, entre le début et la fin de la trame de contrôle 42 du sens montant, la première unité de données 43 qui contient de la signalisation descendante. La deuxième unité de données 44 est par exemple destinée à toutes les autres stations mobiles, qui, elles, sont en mode de réception (puisqu'une seule station émet à la fois) et peuvent l'écouter normalement.

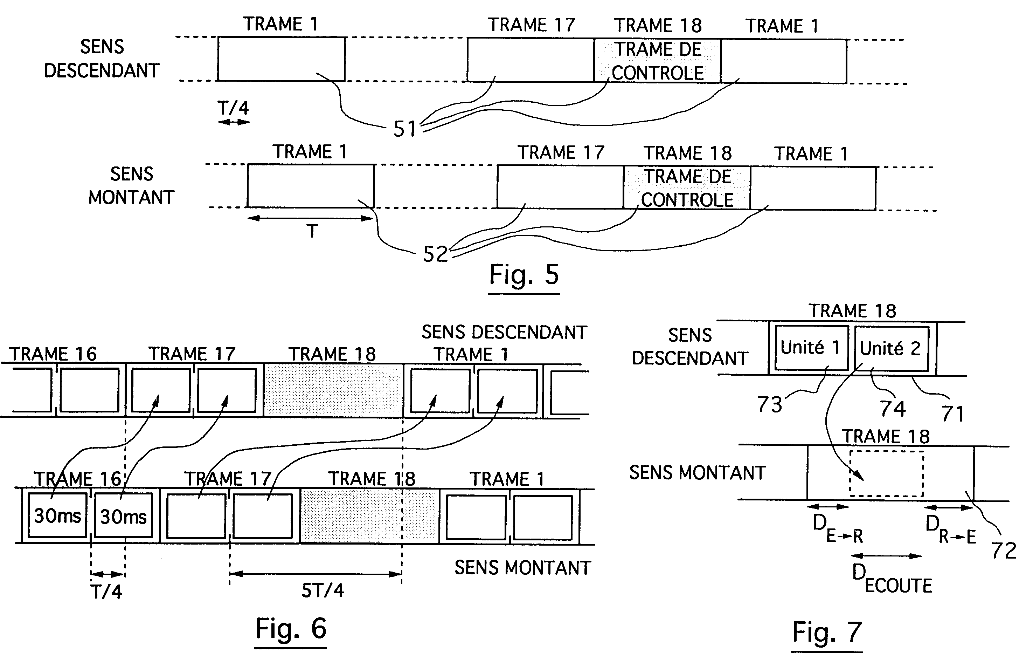

Dans le second mode de réalisation, présenté en relation avec les figures 5 à 7, les trames 52, respectivement les multitrames, du sens montant sont émises avec un retard d'environ un quart de trame T/4, par rapport aux trames 51, respectivement aux multitrames, du sens descendant. Ce décalage est illustré sur la figure 5.

La figure 6 illustre le transfert, dans une station de base, du contenu des trames du sens montant dans les trames du sens descendant.

Il est clair que la station de base ne peut pas copier dans la (i+1)^{ème} trame de trafic du sens descendant le contenu de la i^{ème} trame de trafic du sens montant puisque cette (i+1)^{ème} trame de trafic du sens descendant commence avant la fin de la i^{ème} trame de trafic du sens montant.

Une première solution, non représentée, consiste à placer le contenu de la i^{ème} trame de trafic du sens montant dans la (i + 2)^{ème} trame de trafic du sens descendant (pour i correspondant à toutes les trames du trafic sauf celle(s) précédant une trame de contrôle) ou bien dans la (i + 3)ème trame de trafic du sens descendant - c'est-à-dire la première trame de trafic de la multitrame suivante si la trame de contrôle est en fin de multitrame - (pour i correspondant à la ou les trames de trafic précédant une trame de contrôle).

Ainsi, avec une multitrame de 18 trames, et une trame de contrôle en 18^{ème} position, on place le contenu de la i^{ème} trame de trafic du sens montant:
- dans la (i + 2)^{ème} trame de trafic du sens descendant (pour i ε [1,15]),
- dans la première trame de trafic de la multitrame suivante du sens descendant (pour i = 16),
- dans la seconde trame de trafic de la multitrame suivante du sens descendant (pour i = 17)

Avec cette première solution, lors de la recopie du sens montant vers le sens descendant , la station de base introduit un délai de latence de:
- sept quarts de trame 7T/4, pour les trames d'ordre 1 à 15, et
- onze quarts de trame 11T/4, pour les trames d'ordre 16 et 17, du fait de la trame de contrôle d'ordre 18 (en effet on a: 7T/4 + 1T).

Une seconde solution, visant à réduire ce délai de latence est présentée sur la figure 6.

On considère ici le cas où une trame de trafic comprend deux unités de données codées (par exemple 30 ms chacune). Ceci est possible, par exemple, si les blocs (de 30 ms) issus du codeur de parole sont traités indépendamment les uns des autres (et non pas deux par deux comme c'est généralement le cas) par le codeur de canal qui délivre alors des paquets (ou unités de données) de la durée d'une demi-trame (soit 30 ms).

Cela permet, pour les trames d'ordre i ε [1,16], de placer:
- la première unité de données d'une trame de trafic d'ordre i du sens montant dans la première moitié de la trame de trafic d'ordre (i + 1) du sens descendant, et
- la seconde unité de données d'une trame de trafic d'ordre i du sens montant dans la seconde moitié de la trame de trafic d'ordre (i + 1) du sens descendant.

Pour la trame d'ordre i = 17, puisque la trame d'ordre 18 est une trame de contrôle et ne transmet pas de trafic, cela permet de placer:
- la première unité de données de la trame d'ordre 17 du sens montant dans la première moitié de la trame d'ordre 1 de la multitrame suivante du sens descendant, et
- la seconde unité de données de la trame d'ordre 17 du sens montant dans la seconde moitié de la trame d'ordre 1 de la multitrame suivante du sens descendant.

Il est bien sûr possible de généraliser cette seconde solution à d'autres cas où une multitrame contient un nombre distinct de trames et une ou plusieurs trames de contrôle sont placées différemment dans la multitrame.

Avec cette seconde solution, lors de la recopie du sens montant vers le sens descendant, la station de base introduit un délai de latence de:
- trois quarts de trame 3T/4, pour les deux unités de données des trames d'ordre 1 à 16,
- sept quart de trames 7T/4, pour les deux unités de données de la trame d'ordre 17 (3T/4 + T, du fait de la trame de contrôle).

La figure 7 illustre la fonction d'écoute de la signalisation descendante dans une station mobile. Avec un raisonnement du même type que celui présenté auparavant en relation avec la figure 4, on montre facilement que la station mobile écoute, entre le début et la fin de la trame de contrôle 71 du sens montant, la seconde unité de données 74 qui contient de la signalisation descendante. La première unité de données 73 est par exemple destinée à toutes les autres stations qui peuvent l'écouter normalement.

Le procédé de l'invention peut éventuellement comprendre une procédure de vol de trame et/ou une procédure de mode direct.

Le procédé de vol de trame permet de remplacer une trame de données par une trame volée pouvant être utilisée de façon similaire aux trames de contrôle. Si une telle procédure de vol de trames est utilisée, le schéma d'écoute discuté auparavant doit également définir la fonction et la position de ces trames volées.

La procédure de mode direct permet à deux stations mobiles de communiquer directement, sans l'intermédiaire de la station de base.

En mode direct, les débuts de trame et de multitrames, dans les deux sens de transmission entre les deux stations mobiles, sont par exemple décalés d'un quart de trame par rapport aux débuts de trames et de multitrames du sens descendant, vus de la station de base.

En d'autres termes, les deux stations mobiles qui communiquent entre elles se comportent de façon "classique" vis-à-vis de la station de base. Selon le mode de réalisation auquel on se rattache, à savoir le premier présenté en relation avec les figures 2 à 4, ou le second présenté en relation avec les figures 5 à 7, le décalage correspondra donc respectivement à une avance ou à un retard d'un quart de trame.

On a présenté ici des modes de réalisation particuliers de l'invention, avec des décalages particuliers (par exemple, avance ou retard d'un quart de trame entre les deux sens de transmission) et des découpages particuliers (par exemple, une trame de contrôle peut contenir deux unités de données indépendantes ou non). Il est clair que de nombreux autres modes de réalisation de l'invention (notamment avec d'autres valeurs de décalages et d'autres types de découpages) peuvent être envisagés, sans sortir du cadre de l'invention.

## Revendications

**1.** Procédé de radiocommunication numérique, dans un système à l'alternat, une station mobile (SM) étant soit en mode d'émission soit en mode de réception, et à accès multiple par répartition en fréquence dans lequel, pour chaque communication entre une station mobile (SM) et une station de base (SB), une première fréquence (f₁, f₂) est allouée pour le sens de transmission montant, de la station mobile vers la station de base, et une seconde fréquence (f'₁, f'₂) est allouée pour le sens de transmission descendant, de la station de base vers la station mobile,
caractérisé en ce que les signaux échangés par lesdites stations sont organisés en trames (T1 à T18), de durée fixe prédéterminée, lesdites trames étant regroupées en multitrames (MT(N) à MT(N+2)) comprenant un nombre prédéterminé de trames,
et en ce que chacune desdites multitrames comprend au moins une trame de contrôle (T18), au moins certaines desdites trames de contrôle étant des trames d'écoute (42), pendant lesquelles la station mobile en mode d'émission interrompt l'émission, passe en mode de réception puis, éventuellement, revient en mode d'émission.

**2.** Procédé selon la revendication 1, caractérisé en ce que les stations mobiles sont réparties en au moins un groupe (2₁, 2₂), les stations mobiles d'un même groupe possédant une première fréquence (f₁, f₂) pour le sens de transmission montant et une même seconde fréquence (f'₁, f'₂) pour le sens de transmission descendant, une seule station mobile (SM1₁, SM2₂) d'un groupe pouvant émettre à la fois.

**3.** Procédé selon l'une quelconque des revendications 1 et 2, caractérisé en ce que les instants de début de trames et de début de multitrames vus de la station de base sont décalés dans le temps, entre les deux sens de transmission.

**4.** Procédé selon la revendication 3, caractérisé en ce que le décalage entre les instants de début de trames et de début de multitrames vus de la station de base, entre les deux sens de transmission, est d'une durée au moins égale au temps de retournement émission / réception de la station mobile.

**5.** Procédé selon la revendication 4, caractérisé en ce que les trames, respectivement les multitrames, du sens descendant sont émises avec un retard correspondant sensiblement à un quart de trame (T/4), par rapport aux trames, respectivement aux multitrames, du sens montant.

**6.** Procédé selon la revendication 4, caractérisé en ce que les trames, respectivement les multitrames du sens montant sont émises avec un retard correspondant sensiblement à un quart de trame (T/4), par rapport aux trames, respectivement aux multitrames du sens descendant.

**7.** Procédé selon l'une quelconque des revendications 1 à 6, caractérisé en ce qu'au moins certaines desdites trames de contrôle comprennent deux unités de données (43,44 ; 73,74) de durée sensiblement égale à une demi-trame.

**8.** Procédé selon l'une quelconque des revendications 1 à 7, caractérisé en ce que lesdites trames de contrôle sont utilisées par le mobile en mode d'émission pour effectuer au moins une des opérations appartenant au groupe comprenant les opérations suivantes:
- écouter de la signalisation descendante associée à la communication;
- détecter et/ou mesurer les signaux diffusés dans les cellules adjacentes, dans le cas d'un réseau de communication cellulaire;
- transmettre de la signalisation montante associée à la communication;
- recevoir en mode direct des informations provenant d'une autre station mobile.

**9.** Procédé selon la revendication 8, caractérisé en ce qu'on définit un schéma d'écoute, affectant à chacune desdites trames de contrôle une desdites opérations.

**10.** Procédé selon l'une quelconque des revendications 1 à 9, caractérisé en ce qu'il comprend une procédure de vol de trame, permettant de remplacer une trame de données par une trame volée pouvant être utilisée de façon similaire aux trames de contrôle.

**11** Procédé selon les revendications 9 et 10, caractérisé en ce que ledit schéma d'écoute définit également la fonction et la position des trames volées.

**12.** Procédé selon l'une quelconque des revendications 3 à 11, caractérisé en ce qu'il comprend les étapes suivantes, pour l'écoute de la signalisation descendante dans une desdites trames de contrôle (42) du sens montant :
- pendant le début (D_{E->R}) de ladite trame de contrôle du sens montant, passage du mode d'émission au mode de réception;
- réception (D_{ECOUTE}) d'au moins un message contenu dans une trame de contrôle (41 ; 71) du sens descendant;
- pendant la fin (D_{R->E}) de ladite trame de contrôle du sens montant, passage du mode de réception au mode d'émission ou, éventuellement, interruption de la communication.

**13.** Procédé selon l'une quelconque des revendications 1 à 12, caractérisé en ce qu'il comprend une procédure de mode direct, selon laquelle deux stations mobiles communiquent directement, sans l'intermédiaire de la station de base.

**14.** Procédé selon la revendication 13, caractérisé en ce que, en mode direct, dans les deux sens de transmission, les débuts de trames et de multitrames sont en avance d'un quart de trame par rapport aux débuts de trames et de multitrames du sens descendant, vus de la station de base.

**15.** Procédé selon la revendication 13, caractérisé en ce que, en mode direct, dans les deux sens de transmission, les débuts de trames et de multitrames sont en retard d'un quart de trame par rapport aux débuts de trames et de multitrames du sens descendant, vus de la station de base.

**16.** Procédé selon l'une quelconque des revendications 1 à 15, caractérisé en ce que chaque multitrame comprend 18 trames, la dernière étant une trame de contrôle.

**17.** Procédé selon l'une quelconque des revendications 1 à 16, caractérisé en ce que la durée d'une trame est de l'ordre de 57 ms.

**18.** Signal de radiocommunication numérique échangé entre une station mobile et une station de base, dans un système à l'alternat, une station mobile étant soit en mode d'émission soit en mode de réception, et à accès multiple par répartition en fréquence dans lequel, pour chaque communication entre une station mobile et une station de base, une première fréquence est allouée pour le sens de transmission montant, de la station mobile vers la station de base, et une seconde fréquence est allouée pour le sens de transmission descendant, de la station de base vers la station mobile,
caractérisé en ce que ledit signal est organisé en trames, de durée fixe prédéterminée, lesdites trames étant regroupées en multitrames comprenant un nombre prédéterminé de trames,
et en ce que chacune desdites multitrames comprend au moins une trame de contrôle, au moins certaines desdites trames de contrôle étant des trames d'écoute, pendant lesquelles la station mobile en mode d'émission interrompt l'émission, passe en mode de réception puis, éventuellement, revient en mode d'émission.
